Europäisches Patentamt

European Patent Office

Office européen des brevets

(11) Numéro de publication: **0 250 274 B1**

## FASCICULE DE BREVET EUROPEEN

(45) Date de publication de fascicule du brevet: **30.12.92** (51) Int. Cl.5: **H04N 7/04**

(21) Numéro de dépôt: **87400618.2**

(22) Date de dépôt: **19.03.87**

(54) **Procédé et dispositif de modulation de signaux de télévision, notamment du type D2-MAC/Paquet.**

(43) Date de publication de la demande:
**23.12.87 Bulletin  87/52**

(45) Mention de la délivrance du brevet:
**30.12.92 Bulletin  92/53**

(84) Etats contractants désignés:
**DE GB NL SE**

(56) Documents cités:
**GB-A- 800 305**
**US-A- 4 434 440**

**N.H.K. LABORATORIES NOTE, no. 265, octobre 1981, pages 3-10, Tokyo, JP; S. KANEDA: "Modulation parameters suitable for a frequency-modulation television system for satellite broadcasting in the 12 GHz band"**

**DIE NEUE FERNSEHTECHNIK, Mayer, Franzis-Verlag, 1987, pages 140- 181**

(73) Titulaire: **FRANCE TELECOM**
**6, Place d'Alleray**
**F-75015 Paris(FR)**

Titulaire: **TELEDIFFUSION DE FRANCE**
**10, rue d'Oradour sur Glane**
**F-75932 Paris Cédex 15(FR)**

(72) Inventeur: **Veillard, Jacques**
**La Vizeule Montgermont**
**F-35760 Saint Grégoire(FR)**
Inventeur: **Piacenza, Francis**
**25, rue Emile Bernard**
**F-35700 Rennes(FR)**
Inventeur: **Milesi, Gilbert**
**12, rue Adolphe Leray**
**F-35000 Rennes(FR)**

(74) Mandataire: **Fort, Jacques et al**
**CABINET PLASSERAUD 84, rue d'Amsterdam**
**F-75009 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne la modulation en fréquence de signaux de télévision et, notamment, la modulation en fréquence à partir d'un signal modulant vidéo à multiplexage temporel d'une partie analogique et d'une partie numérique pour chaque ligne, à transmission de la composante continue du signal modulant.

L'invention trouve une application particulièrement importante dans la modulation de signaux du type D2-MAC/Paquet, prévus pour la diffusion directe par satellite. On pourra trouver une description complète des signaux D2-MAC/Paquet dans la norme "spécification du système D2-MAC/Paquet" de septembre 1985, publiée par le Secrétariat d'Etat chargé des techniques de la communication. La possibilité de mettre en oeuvre un procédé de codage conforme au préambule de la revendication 1 est exposée dans la document "Die Neue Fernsehtechnik", Mayer, 1987, Franzis-Verlag, München, pages 140-181.

Il suffit toutefois, pour comprendre l'invention, de se souvenir que les signaux de télévision du type X-MAC/Paquet (X désignant l'une des variantes envisagées) utilisent deux niveaux de multiplexage temporel des différents types d'informations à transmettre. Les informations numériques sont tout d'abord multiplexées par paquets, chaque paquet transportant des données appartenant à une seule composante de service. Un second niveau de multiplexage donne naissance à un signal global comportant le train numérique et les informations relatives à l'image, ainsi que des informations de contrôle.

L'originalité du D2-MAC/Paquet est notamment d'utiliser un multiplex temporel en bande de base dans lequel la partie numérique est codée en duobinaire. Ce signal en bande de base doit être soumis à une préaccentuation et la partie numérique doit être soumise à dispersion d'énergie avant modulation d'une porteuse. Les signaux numériques et analogiques traversent une même voie dans le modulateur.

La constitution particulière d'un tel signal ne permet pas de lui appliquer les techniques courantes de modulation de fréquence. En particulier, la nécessité de transmettre la composante continue du signal modulant implique que la composante continue du signal appliqué à l'entrée de l'oscillateur commandé en tension soit restituée. Il faut encore que le signal de dispersion d'énergie soit appliqué avec un synchonisme déterminé par rapport à la période de balayage ligne et ce résultat ne peut être atteint que grâce à une extraction de synchronisation.

La présente invention vise à fournir un procédé et un dispositif répondant à ces exigences. Dans ce but l'invention propose notamment un procédé de modulation en fréquence à partir d'un signal modulant vidéo suivant la revendication 1. signal d'erreur à partir duquel on effectue une commande automatique de fréquence de l'oscillateur.

L'invention propose également un dispositif permettant de mettre en oeuvre le procédé ci-dessus défini, suivant la revendication 2.

L'invention sera mieux comprise à la lecture de la description qui suit d'un mode particulier d'exécution de l'invention, donné à titre d'exemple non limitatif. La description se réfère aux dessins qui l'accompagnent, dans lesquels :

- la Figure 1 est un schéma montrant la forme d'onde du signal en bande de base utilisé pour la modulation,
- la Figure 2 est un schéma de principe d'un modulateur suivant l'invention,
- la Figure 3 est un schéma synoptique d'un circuit d'extraction de synchronisation utilisable dans le modulateur de la figure 2,
- la Figure 4 est un schéma synoptique d'un circuit de traitement en bande de base utilisable dans le modulateur de la figure 2,
- la Figure 5 montre un réseau de préaccentuation utilisable dans le circuit de la Figure 4,
- la Figure 6 est un synoptique d'un circuit possible d'amplification ultra haute fréquence et de commutation,
- les Figures 7 et 8 sont des schémas de principe d'un circuit de doublage de fréquence et de transposition et d'une boucle de CAF utilisables dans le décodeur de la figure 2.

Avant de décrire un modulateur suivant l'invention, il peut être utile de rappeler la constitution du signal en bande de base utilisé dans la mise en oeuvre de la norme D2-MAC/Paquet.

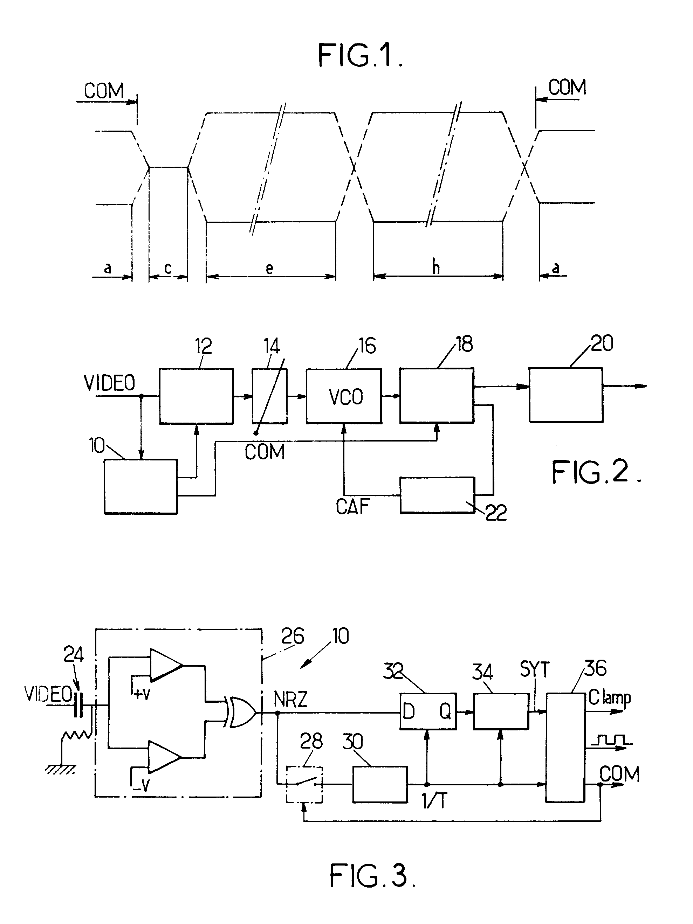

La figure 1 montre la forme d'onde en bande de base dans le cas d'un signal non embrouillé. On trouve successivement :

- une période a correspondant à 208 périodes d'horloge, destinée à la transmission de 105 éléments binaires (ebs ou bits) de données et de synchronisation.
- après une période de transition, une période de clampage c correspondant à 15 périodes d'horloge, à un niveau de 0 Volt.
- après une nouvelle période de transition, une période e correspondant à 348 coups d'horloge, destinée à la transmission de la composante de différence de couleur (ou chrominance).
- après une nouvelle période de transition, une période h de 696 coups d'horloge pour la transmission de la composante de luminance.

Le modulateur qui sera maintenant décrit est prévu pour fournir une porteuse modulée dont la fréquence centrale peut varier dans un domaine déterminé, grâce à la présence d'un oscillateur de transposition. Il peut être regardé comme comportant un circuit d'extraction de synchronisation 10 et une chaîne de modulation proprement dite constituée d'un circuit 12 de traitement en bande de base, d'un atténuateur 14 ajustable, d'un oscillateur à fréquence commandée par tension 16, d'un circuit d'amplification UHF et de commutation 18, et d'un circuit de transposition 20. Une boucle 22 de commande automatique de fréquence de l'oscillateur 16 est prévue. Elle est mise en service par le commutateur du circuit 18 pendant les périodes de présence de la partie numérique du signal et comporte un discriminateur.

Le circuit d'extraction de synchronisation 10 (figure 3) reçoit le signal d'entrée modulant. Il comprend successivement un filtre passe-haut 24 de type RC suivi d'un décodeur duobinaire 26, formé de deux comparateurs et d'un circuit OU EXCLUSIF. Le filtre passehaut permet de s'affranchir des variations d'amplitude du signal d'image. Il suffit de lui donner une constante de temps de l'ordre de 1 $\mu$s pour que l'on puisse reconnaître sans risque d'erreur le mot de synchronisation de trame placé dans la partie numérique. Le décodeur 26 est suivi d'un montage de récupération d'horloge effectuant un traitement non linéaire sur le signal provenant du décodeur. Ce traitement non linéaire, qui permet de passer du signal NRZ sortant du décodeur à un signal RZ, fournit une composante spectrale à la fréquence de rythme de 10,125 MHz.

Le traitement non linéaire est effectué pendant les périodes de présence du signal numérique. Pour cela, le signal de sortie du décodeur 26 est prélevé par un commutateur 28 fermé par un signal COM, dont la génération sera décrite plus loin, pendant les périodes a. Le signal fourni par le commutateur 28 est appliqué à un circuit 30 de récupération de rythme, constitué par une boucle à verrouillage de phase. Cette boucle peut avoir une constitution simple et par exemple comporter un oscillateur formé par une porte ECL dont le circuit de réaction contient un quartz en série avec une diode à capacité réglable par tension. Le circuit fournit sur sa sortie une composante spectrale à la fréquence de rythme 1/T, de 10,125 MHz suivant la norme D2-MAC.

La fréquence de rythme est appliquée aux autres éléments du circuit d'extraction 10 qui comprennent une seconde branche de sortie du décodeur 26. Cette seconde branche comporte une bascule 32 et un corrélateur 34 de reconnaissance du mot de synchronisation trame. Dans la pratique, il suffit que la valeur moyenne du signal d'entrée soit voisine de 0 au bout d'un temps inférieur à 4

$\mu$s pour éviter les erreurs de reconnaissance du mot de synchronisation trame. En conséquence, il suffit que le filtre 24 ait une constance de temps de l'ordre de 1 $\mu$s.

Le signal à fréquence rythme et le signal SYT de reconnaissance du mot de synchronisation trame sont appliqués à une base de temps 36 destinée à fournir le signal de clampage correspondant aux durées c, un signal carré à 25 Hz utilisé pour réaliser la dispersion d'énergie du signal, et le signal COM. La base de temps 36 peut être essentiellement constituée d'un compteur de lignes et d'un compteur de points sur chaque ligne qui adressent deux mémoires programmées de façon à fournir les signaux de sortie pendant les périodes prévues.

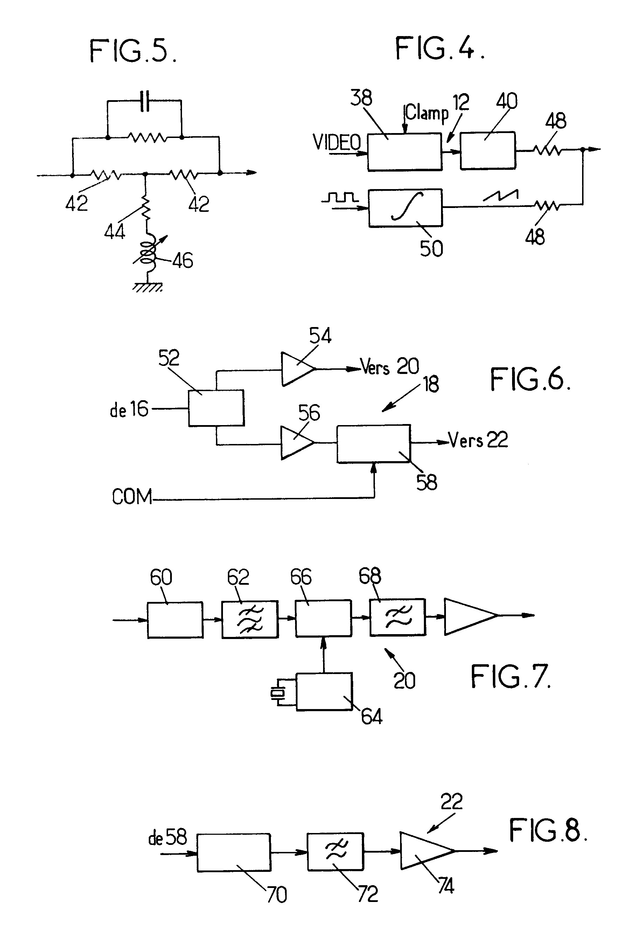

Le circuit 12 de traitement en bande de base peut avoir la constitution de principe montrée en figure 4. Le signal vidéo d'entrée (signal modulant) est d'abord soumis à clampage dans un circuit de porte 38 qui reçoit le signal "clamp" provenant de la base de temps 36. Le signal obtenu est ensuite soumis à une préaccentuation dans un circuit 40 qui aura généralement une fonction transfert du type

$$H\ (f)\ =\ A\ \frac{1\ +\ j\ (f/f1)}{1\ +\ j\ (f/f2)}$$

avec

A = $1/\sqrt{2}$
f1 = 0,84 MHz
f2 = 1,5 MHz

Cette fonction de transfert peut notamment être réalisée par un quadripole en T du genre montré en figure 5, comportant deux résistances 42 en série, dont le point milieu est mis à la masse par une autre résistance 44 et une inductance 46, l'ensemble des résistances 42 et 44 étant placées en parallèle avec un circuit LC.

Un réseau additionneur, schématisé sur la figure 4 par deux résistances 48, permet d'ajouter, au signal préaccentué, un signal triangulaire de dispersion d'énergie obtenu par intégration du signal carré à 25 Hz fourni par la base de temps 36. Cette intégration peut être effectuée par un circuit 50 de constitution classique.

Le signal de sortie du circuit 12 attaque, par l'intermédiaire de l'atténuateur 14, qui pourra être prévu pour fournir une atténuation ajustable allant de 0 à 10 db, l'oscillateur 16 commandé en tension. Cet oscillateur peut être de type connu, présentant une fréquence centrale de 230 MHz. Il faut seulement noter qu'il doit comporter deux entrées de commande de fréquence, d'une part une entrée de modulation avec transmission de la composante continue, recevant le signal de sortie de l'atténuateur 14, d'autre part une entrée de commande automatique de fréquence qui coopère avec une boucle dont il sera question plus loin.

Le circuit d'amplification UHF et de commutation 18 reçoit le signal de sortie de l'oscillateur 16. Il remplit deux fonctions. D'une part il échantillonne la porteuse modulée pendant les intervalles correspondant à la partie numérique du signal MAC, intervalles de temps définis par le signal COM provenant du circuit d'extraction 10 ; d'autre part il fournit, après amplification, la porteuse modulée à 230 MHz.

Le circuit 18 peut avoir la constitution générale montrée en figure 6 et comprendre un séparateur 52 qui alimente une branche d'amplification 54 fournissant la porteuse modulée appliquée au circuit de transposition 20. La seconde branche comporte un amplificateur 56 suivi d'un modulateur en anneau 58 constituant commutateur haute fréquence, commandé par le signal COM provenant de la base de temps 36. Le circuit de transposition 20 peut prendre des formes très diverses. Dans le mode de réalisation montré en figure 7, il comporte un doubleur de fréquence 60 qui a pour rôle d'améliorer les caractéristiques de linéarité du modulateur. Le signal à 460 MHz fourni par le doubleur 60 est appliqué à un filtre passe bande 62, qui sera généralement un filtre passif de façon à avoir une largeur de bande à -3 db de l'ordre de 50 MHz. Puis le signal filtré est transposé à la fréquence de sortie du modulateur par hétérodynage avec le signal fourni par un oscillateur de transposition 64. Les signaux de sortie 62 et 64 sont appliqués à un mélangeur 66 et la sortie de ce dernier appliquée à un filtre passe-bas 68. Une largeur de bande à 3 db d'environ 170 MHz sera généralement suffisante. L'oscillateur local peut être ajustable pour permettre d'adopter une fréquence de sortie du modulateur comprise entre 30 et 140 MHz.

Enfin, le modulateur comporte un circuit de commande automatique de fréquence qui joue un rôle important, car il permet d'affranchir le modulateur des variations à long terme de la fréquence centrale de l'oscillateur 16 commandé en tension.

La boucle de commande automatique de fréquence fonctionne de la façon suivante. Une tension d'erreur est extraite de la partie numérique du signal D2-MAC dont la valeur moyenne est nulle. La porteuse modulée en fréquence est échantillonnée à chaque ligne pendant la période de 10 $\mu$s de transmission des informations numériques à l'aide du signal COM. Puis les échantillons sont appliqués à un démodulateur de fréquence : le signal démodulé est filtré avec une grande constante de temps, de l'ordre de 10 secondes, puis appliqué à l'oscillateur commandé en tension 16.

La boucle peut avoir la constitution de principe montrée en figure 8 et comporter un discriminateur 70 du type à ligne à retard ayant une fréquence centrale de 230 MHz. Ce discriminateur fournit sur sa sortie des salves numériques démodulées, dont la valeur moyenne est nulle lorsque la porteuse est à la fréquence nominale de 230 MHz mais différente de 0 en cas de dérive. Un filtre actif 72, présentant une constante de temps supérieure de plusieurs ordres de grandeur à la durée d'une trame (10 secondes par exemple), fournit sur sa sortie une tension, d'erreur lorsque l'oscillateur 16 présente une dérive par rapport à la fréquence de consigne de 230 MHz. Cette tension d'erreur est amplifiée par un amplificateur 74, puis appliquée à l'entrée de commande automatique de fréquence de l'oscillateur 16.

## Revendications

1. Procédé de modulation en fréquence à partir d'un signal modulant vidéo constitué par un multiplex temporel d'une partie analogique, d'une partie numérique à valeur moyenne constante et frequénce de rythme fixe (1/T) et, sauf pour la ligne 625 de la suppression trame, d'une période de clampage pour chaque ligne, à transmission de la composante continue du signal modulant, suivant lequel on traite en bande de base le signal modulant pour effectuer une dispersion d'énergie par addition d'un signal à période prédéterminée, et éventuellement une préaccentuation du signal,
   caractérisé en ce que :
   a/ on extrait du signal modulant, à chaque ligne, une fenêtre temporelle (COM) encadrant la partie numérique du signal, une fenêtre de clampage encadrant la période de clampage, et le signal de synchronisation de trame contenu dans la partie numérique,
   b/ au cours du traitement en bande de base, on soumet le signal modulant à clampage pendant ladite fenêtre de clampage et on effectue la dispersion en utilisant un signal de dispersion élaboré à partir de la synchronisation de trame,
   c/ on applique le signal traité à l'entrée d'un oscillateur à commande par tension qui fournit le signal modulé sur une sortie,
   d/ on prélève une fraction du signal modulé pendant la durée de la fenêtre temporelle (COM) et on la soumet à discrimination et filtrage pour obtenir un signal d'erreur à partir duquel on effectue une commande automatique de fréquence de l'oscillateur.

2. Modulateur en fréquence à partir d'un signal modulant vidéo constitué pour chaque ligne par un multiplexage temporel d'une partie analogique, d'une partie numérique à valeur moyenne constante et fréquence de rythme fixe pour chaque ligne et, sauf pour la ligne 625 de la suppression trame, d'une période de clampage, à transmission de la composante continue du signal modulant, caractérisé en ce qu'il comprend :

a/ un circuit d'extraction de synchronisation (10) pour extraire, à partir du signal modulant, et pour chaque ligne, une fenêtre temporelle (COM) encadrant la partie numérique du signal, une fenêtre de clampage encadrant la période de clampage, prévue à chaque ligne en dehors de la ligne 625 de la suppression trame, et pour extraire la synchronisation trame et générer à partir d'elle un signal périodique de dispersion d'énergie,

b/ un circuit (12) de traitement en bande de base du signal modulant, comportant des moyens pour superposer, au signal modulant d'entrée, le signal périodique de dispersion d'énergie, et prévu pour soumettre le signal modulant à clampage pendant ladite fenêtre de clampage,

c/ un oscillateur UHF (16) à commande par tension recevant sur l'une de ses entrées un signal de commande automatique de fréquence et sur une autre entrée le signal traité, et fournissant à sa sortie le signal modulé,

d/ des moyens de prélèvement du signal modulé, comprenant un commutateur (58) qui n'est activé que pendant la durée de la fenêtre temporelle (COM) et,

e/ un circuit de discrimination et de filtrage passe-bas (22) fournissant, à partir du signal prélevé, un signal d'erreur de fréquence et appliquant ce signal à l'entrée de commande automatique de fréquence de l'oscillateur UHF (16).

3. Modulateur selon la revendication 2, caractérisé en ce que le circuit d'extraction de synchronisation (10) comporte des moyens (50) pour élaborer, pendant la durée de chaque partie numérique, un signal de commande de dispersion d'énergie appliqué au circuit de traitement en bande de base (12).

4. Modulateur selon la revendication 2 ou 3, caractérisé en ce que le circuit d'extraction de synchronisation (10) comprend des moyens (26) de décodage de la partie numérique de chaque ligne et un circuit de récupération du rythme à échantillonnage pendant la durée de la fenêtre temporelle (COM) et en ce que le modulateur comporte un corrélateur (34) fournissant un signal de synchronisation des trames à une base de temps (36) de génération :
- d'une fenêtre temporelle correspondant à la partie numérique du signal (COM),
- d'un signal de clampage
- et d'un signal de commande de dispersion d'énergie.

5. Dispositif selon l'une quelconque des revendications 2 à 4, caractérisé en ce que le signal de traitement en bande de base comporte des moyens de préaccentuation constitués par un quadripôle en T comportant une chaîne de résistances (42), en parallèle avec un condensateur, et une inductance (46) reliant à la masse le point milieu de la chaîne de résistances.

6. Dispositif selon l'une quelconque des revendications 2 à 5, caractérisé en ce que le commutateur est constitué par un modulateur en anneau commandé pendant la fenêtre temporelle (COM).

7. Dispositif selon l'une quelconque des revendications 2 à 6, caractérisé en ce que le discriminateur est une ligne à retard, conçue pour fournir un signal de sortie constitué de salves numériques démodulées de valeur moyenne nulle lorsque la porteuse est à la fréquence nominale,

8. Dispositif selon l'une quelconque des revendications 2 à 7, caractérisé en ce qu'il comporte de plus un circuit de transposition en fréquence, comprenant un circuit de transposition à la fréquence de sortie du modulateur.

9. Dispositif selon l'une quelconque des revendications 2 à 8 de modulation de signal de télévision du type D2-MAC/Paquet, caractérisé en ce que le circuit d'extraction de synchronisation est prévu pour fournir une fenêtre de clampage de 750 ns, une fenêtre temporelle de 10 $\mu$s et un signal de dispersion d'énergie à une fréquence de 25 Hz pour une cadence de 50 images par seconde.

**Claims**

1. A method of frequency modulation starting from a video modulating signal comprising a time multiplex of an analog part, a digital part having a constant average value and a fixed rhythm frequency (1/T) and, except for the vertical blanking line 625, a clamping period for each line, with transmission of the DC component of the modulating signal, comprising baseband treatment of the modulating signal for the purpose of dispersing energy by adding a signal having a predetermined period, and optionally for preemphasising the signal, characterised in that

a) a time window (COM) framing the digital part of the signal, a clamping window framing the clamping period, and the frame synchronisation signal in the digital part are extracted from the modulating signal at each line,

b) during base-band processing, the modulating signal is clamped during the clamping window and dispersion is brought about by using a dispersion signal prepared from the frame synchronisation,

c) the processed signal is applied to the input of a voltage-controlled oscillator which outputs the modulated signal,

d) a fraction of the modulated signal is sampled during the time window (COM) and is discriminated and filtered to obtain an error signal used for automatic frequency control of the oscillator.

2. A frequency modulator starting from a video modulating signal which, for each line, comprises a time multiplexing of an analog part, a digital part having a constant average value and a fixed rhythm frequency for each line and a clamping period, except for the vertical blanking line 625, with transmission of the DC component of the modulating signal, the modulator being characterised in that it comprises:

a) a synchronisation extraction circuit (10) adapted, starting from the modulating signal and for each line, to extract a time window (COM) framing the digital part of the signal, a clamping window framing the clamping period provided at each line outside the vertical blanking line 625, and for extracting the frame synchronisation and using it to generate a periodic energy dispersion signal,

b) a circuit (12) for baseband processing of the modulating signal, comprising means for superposing the periodic energy dispersion signal on the input modulating signal and adapted to clamp the modulating signal during the clamping window,

c) a voltage controlled UHF oscillator (16) which receives an automatic frequency control signal on one input and the processed signal on another input and which outputs the modulated signal,

d) means for sampling the modulated signal, comprising a switch (58) which is actuated only during the time window (COM) and

e) a low-pass filtering and discrimination circuit (22) which, starting from the sampled signal, supplies a frequency error signal and applies the signal to the automatic frequency control input of the UHF oscillator (16).

3. A modulator according to claim 2, characterised in that the synchronisation extraction circuit (10) comprises means (50) which, during each digital part, prepare an energy dispersion control signal which is applied to the baseband processing circuit (12).

4. A modulator according to claim 2 or 3, characterised in that the synchronisation extraction circuit (10) comprises means (26) for decoding the digital part of each line and a rhythm recovery circuit with sampling during the time window (COM) and in that the modulator comprises a correlator (36) which supplies a frame synchronisation signal to a time base (36) for generating:

- a time window corresponding to the digital part of the signal (COM),
- a clamping signal and
- an energy dispersion control signal.

5. A device according to any of claims 2 to 4, characterised in that the baseband processing signal comprises pre-emphasis means consisting of a T quadrupole comprising a chain of resistors (42) in parallel with a capacitor and an inductor (46) which connects the centrepoint of the chain of resistors to earth.

6. A device according to any of claims 2 to 5, characterised in that the switch is a ring modulator which is actuated during the time window (COM).

7. A device according to any of claims 2 to 6, characterised in that the discriminator is a delay line and is designed to supply an output signal made up of demodulated digital bursts having a zero average value when the carrier is at the nominal frequency.

8. A device according to any of claims 2 to 7, characterised in that it also comprises a frequency transposition circuit comprising a circuit for transposition to the output frequency of the modulator.

9. A device according to any of claims 2 to 8 for modulating a D2-MAC/Packet type television signal, characterised in that the synchronisation extraction circuit is adapted to provide a 750 ns clamping window, a 10 µs time window and an energy dispersion signal at a frequency of 25 Hz at a rate of 50 images per second.

## Patentansprüche

1. Verfahren zur Modulation der Frequenz ausgehend von einem modulierenden Videosignal, welches durch einen Zeitmultiplex eines analogen Abschnitts und eines digitalen Abschnitts mit konstantem mittleren Wert und einer festen Taktfrequenz (1/T) und abgesehen von der Zeile 625 der Halbbildaustastung durch eine Klemmperiode für jede Zeile gebildet ist, mit Übertragung der kontinuierlichen Komponente des modulierenden Signals, nach welcher das modulierende Signal im Basisband verarbeitet wird, um eine Dispersion der Energie durch Addition eines Signals mit vorbestimmter Periode und eventuell eine Akzentuierung des Signals zu bewirken, **dadurch gekennzeichnet, daß**

a) aus dem modulierenden Signal in jeder Zeile ein Zeitfenster (COM), welches den digitalen Abschnitt des Signals einrahmt, ein Fenster des Klemmens, welches die Klemmperiode einrahmt, und das Halbbildsynchronisationssignal, welches im digitalen Abschnitt enthalten ist, ausgelesen wird,

b) im Laufe der Verarbeitung im Basisband das modulierende Signal innerhalb des Klemmfensters einem Klemmen unterzogen wird und die Dispersion durch Benutzung eines ausgehend von der Halbbildsynchronisation bearbeiteten Dispersionssignals durchgeführt wird,

c) daß das bearbeitete Signal an den Eingang eines spannungsgesteuerten Oszillators gelegt wird, der das modulierte Signal an einem Ausgang liefert,

d) ein Anteil des modulierten Signals während der Dauer des Zeitfensters (COM) abgegriffen wird und einer Diskrimination und Filterung unterzogen wird, um ein Fehlersignal zu liefern, von welchem ausgehend eine automatische Frequenzsteuerung des Oszillators durchgeführt wird.

2. Modulator der Frequenz, der von einem modulierenden Videosignal ausgeht, welches für jede Zeile durch einen Zeitmultiplex eines analogen Abschnitts und eines digitalen Abschnitts mit konstantem mittleren Wert und einer festen Taktfrequenz für jede Zeile und abgesehen von der Zeile 625 der Halbbildaustastung durch eine Klemmperiode gebildet ist, mit Übertragung der kontinuierlichen Komponente des modulierenden Signals,

**dadurch gekennzeichnet, daß** er umfaßt:

a) eine Synchronisationsextraktionsschaltung (10), um ausgehend vom modulierenden Signal und für jede Zeile ein den digitalen Abschnitt des Signals einrahmendes Zeitfenster (COM), ein die Klemmperiode einrahmendes Klemm-Fenster, welches außer für die Halbbildaustastzeile 625 für jede Zeile vorgesehen ist, zu extrahieren und um die Halbbildsynchronisation zu extrahieren und von ihr ausgehend ein periodisches Energiedispersionssignal zu erzeugen,

b) eine Schaltung (12) der Verarbeitung im Basisband des modulierenden Signals, welches Mittel umfaßt, um dem modulierenden Eingangssignal das periodische Energiedispersionssignal zu überlagern, und dazu vorgesehen ist, um das modulierende Signal während des Klemm-Fensters einem Klemmen zu unterziehen,

c) einen spannungsgesteuerten UHF-Oszillator, der auf einem seiner Eingänge ein automatisches Frequenzsteuersignal empfängt sowie auf einem anderen Eingang das bearbeitete Signal und an seinem Ausgang das modulierte Signal liefert,

d) Mittel zum Abgreifen des modulierten Signals, welche einen Umschalter (58), der nur während der Dauer des Zeitfensters (COM) aktiviert wird, umfassen, und

e) eine Diskriminations- und Tiefpaßfilterschaltung (22), welche ausgehend vom abgegriffenen Signal ein Frequenz-Fehlersignal liefert und dieses Signal an den automatischen Frequenzsteuereingang des UHF-Oszillators (16) legt.

3. Modulator nach Anspruch 2, dadurch gekennzeichnet, daß die Synchronisationsextraktionsschaltung (10) Mittel (50) umfaßt, um während der Dauer jedes digitalen Abschnitts ein Energiedispersions-Steuersignal zu bearbeiten, welches auf die Verarbeitungsschaltung im Basisband (12) gelegt wird.

4. Modulator nach Anspruch 2 oder 3, dadurch gekennzeichnet, daß die Synchronisationsextraktionsschaltung (10) Dekodierungsmittel (26) für den digitalen Abschnitt jeder Zeile umfaßt sowie während der Zeitdauer des Zeitfensters (COM) eine Abtasttakt-Wiederherstellungsschaltung, und daß der Modulator einen Korrelator (34) umfaßt, welcher ein Synchronisationssignal der Halbbilder an eine Zeitbasis (36) liefert, zur Erzeugung: eines dem digitalen Anteil des Signals (COM) entsprechenden Zeitfensters,
eines Klemmsignals,
und eines Steuersignals für die Energiedispersion.

5. Vorrichtung nach einem der Ansprüche 2 bis 4, dadurch gekennzeichnet, daß das Verarbeitungssignal im Basisband Akzentuierungsmittel umfaßt, welche durch einen Quadrupol in der Form eines T gebildet werden, der eine Kette von Widerständen (42) parallel zu einem Kondensator und eine den mittleren Punkt der Kette von Widerständen mit Massepotential verbindende Induktivität (46) umfaßt.

6. Vorrichtung nach einem der Ansprüche 2 bis 5, dadurch gekennzeichnet, daß der Umschalter durch einen während des Zeitfensters (COM) gesteuerten Doppelgegentakt-Gleichrichter gebildet ist.

7. Vorrichtung nach einem der Ansprüche 2 bis 6, dadurch gekennzeichnet, daß der Diskriminator eine Zeile mit Verzögerung ist, welche vorgesehen ist, um ein Ausgangssignal zu liefern, welches aus digitalen, demodulierten Salven gebildet ist, deren mittlerer Wert null ist, während die Trägerwelle auf der Nominalfrequenz ist.

8. Vorrichtung nach einem der Ansprüche 2 bis 7, dadurch gekennzeichnet, daß sie darüber hinaus eine Frequenztranspositionsschaltung umfaßt, welche eine Transpositionsschaltung auf die Ausgangsfrequenz des Modulators beinhaltet.

9. Vorrichtung nach einem der Ansprüche 2 bis 8 zur Modulation eines Fernsehsignals nach der D2-MAC-Paket/Norm, dadurch gekennzeichnet, daß die Synchronisationsextraktionsschaltung vorgesehen ist, um ein Klemmfenster von 750 ns, ein Zeitfenster von 10 µs und ein Energiedispersionssignal mit einer Frequenz von 25 Hz für einen Takt von 50 Bildern pro Sekunde zu liefern.

# FIG.1.

COM → ← COM

a  c  e  h  a

## FIG.2.

VIDEO → 12 → 14 → 16 VCO → 18 → 20 →

10

COM

CAF → 22

# FIG.3.

VIDEO 24 26 10

+v

-v

NRZ

28 30

32 D Q 34 SYT 36

Clamp

COM

1/T

FIG.3.

FIG.5.

FIG.4.

FIG.6.

FIG.7.

FIG.8.